# EUROPEAN PATENT SPECIFICATION

(11) **EP 0 357 303 B1**
(45) Date of publication and mention of the grant of the patent: **16.03.1994**
(21) Application number: 89308387.3
(22) Date of filing: 18.08.1989
(51) Int. Cl.: B01D 3/20

(54) **Downcomer, distillation tray assembly and distillation column**
Ablaufschacht, Destillationsbodenanordnung und Destillationskolonne
Tube de retour, arrangement de plateau de distillation et colonne de distillation

(30) Priority: 19.08.1988 US 233769
(43) Date of publication of application: 07.03.1990
(73) Proprietor: NYE TRAYS, INC. (a Texas corporation), Friendswood Texas 77546 (US)
(72) Inventor: Nye, James O., Friendswood, Texas 77546 (US)
(74) Representative: Moir, Michael Christopher

(56) References cited:
- AU-A- 349 435
- DE-B- 1 070 140
- FR-A- 864 216
- FR-A- 2 125 400
- US-A- 1 488 422
- US-A- 2 960 322

## Description

### BACKGROUND OF THE INVENTION

### Field of The Invention

The present invention relates to an improved distillation column, particularly an improved tray. More specifically it relates to a new downcomer assembly.

### Related Art

In the ordinary operation of a tray on distillation column the liquids flow downwardly while the gases flow upwardly. In a distillation column there are usually a plurality of plates or trays. The trays have some means of allowing vapor to flow upwardly, e.g., plurality of openings while flowing the liquid on to the tray, thereby bringing the downflowing liquid in contact with the upflowing vapors on the tray. When the liquid contacts the vapor on each tray, and mass transfer occurs, the lighter constituent(s) is (are) concentrated in the overheads of the tower, and the heavier constituent(s) (are) is concentrated in the lower part of the tower. The liquid moves downward from tray to tray, generally by means of downcomers.

Early downcomers are illustrated by U.S. Patent No.'s US-A-2,565,355; US-A-2,582,657; US-A-2,582,826; US-A-2,699,929; US-A-2,714,504 and US-A-3,573,172, wherein each downcomer is of substantially uniform cross section. There is entrained vapor in the liquid entering the downcomers, and therefore a disengagement of vapor from the liquid in the downcomer is going to occur with a specific area of the downcomer being required to achieve this, to prevent a prematurely "flooded tower" arising. Likewise, there are entrained droplets of liquid in the vapor rising from the tray. If the upward velocity of the vapor is sufficiently low, these droplets will fall back to join the liquid on the tray from whence they came. As the upward vapor velocity increases, more and more droplets are entrained to the tray above. This liquid must then flow back through the downcomer. When the vapor velocity reaches the point that more liquid is entrained upward than the downcomer can handle, flooding occurs. Thus, in the design of a tower there is a competing factor to consider, which is the active area of the tray. The active area is mathematically defined as the cross-sectional area through which the upward flowing vapor passes. The upward velocity of the vapor is the volume of vapor per unit time divided by the "effective active area" of the tower.

The vapor handling capacity of the tower is generally proportional to the active area of the tray(s). It was found that in the downcomers that the disengagement of the vapors and liquid may be accomplished by enlarging the area of the upper portion of the downcomer and reducing the area of the lower portion of the downcomer. This in effect increased the area of the tray(s), and is illustrated for example in US Pat. No.'s US-A-2,420,075; US-A-2,491,726; US-A-2,591,343; US-A-2,596,249; and US-A-4,174,363. Hence, the improvement pursued has been to maintain the required area in the downcomer for vapor disengagement while increasing the effective active area of the tray(s).

Some unique approaches to this desirable result have been devised by the art, for example, terminating the downcomer above the liquid level of the tray below of a type like that shown in US Pat. No. US-A-4,278,621, an alternative system has been the use of a downcomer seal pan above the tray but below the liquid level and perforated bubble caps or bubble promoters of a type as shown in US Patent US-A-4,510,023.

The present invention increases the effective active tray area in the column. Actual testing showed that the improved throughput of the column was directly proportional to the increase in effective active area. It is a feature of the present invention, that by initiating vigorous contacting of the vapor and liquid as the liquid enters the tray, the general frothing action on the whole tray increases, thereby increasing the mass transfer and tray stability. It is an advantage of the present invention that the capacity (i.e., throughput) of a multi-tray distillation column is substantially increased relative to a comparable prior art column (same size, number of trays, feed purity, etc). It is a further advantge that the improved structure may be a retro fit, replacing substantially only part of the downcomers. These and other advantages and features will become apparent from the following.

### SUMMARY OF THE INVENTION

Briefly the present invention provides a downcomer for use in a distillation column comprising a seal pan forming the bottom of the downcomer and a generally downwardly extending plate having a lower end which extends along the seal pan and is spaced slightly thereabove, characterised in that the seal pan is adapted to be positioned above an adjacent lower tray, and in that a generally downwardly extending perforated plate is positioned adjacent to and along and below said seal pan so as to extend to the lower tray, whereby to increase the effective active area of the tray.

The said, first perforated plate preferably extends away from, the bottom of the downcomer to the lower adjacent tray. A perforated base plate is preferably used to replace the former seal pan. This simple expedient has shown up to a 20% increase in throughput over the same column using prior art type of downcomers. Basically the upward moving vapors can pass through the perforated base plate, if any, and then through the first perforated plate in the same manner as they do through the tray, hence in effect the first perforated plate which extends between the tray and the seal pan serves or at least functions as additional tray surface. It is preferred that the first perforated plate is inclined at least in part, that is, it extends away from the bottom of the downcomer. This gives a slightly greater surface and also facilitates the vapor passage and contact with the liquid.

In the one embodiment the bottom of the downcomer extends over the perforated plate to form a lip which is more preferably serrated. The serrated configuration may contribute to better contact between the rising vapors from the perforated plate and the liquid coming from the downcomer.

The invention further provides a tray assembly comprising a downcomer as set forth above, and also a distillation column provided with such a tray assembly.

### BRIEF DESCRIPTION OF THE DRAWINGS

Fig. 1 is a schematic representation of a cross sectional view of a section of a distillation column employing both sides mounted and central mounted downcomers according to the present invention.

Fig. 2 is a cross sectional view of center mount downcomer bottom assembly.

Fig. 3 is a partial in plan view of the assembly of Fig. 2 taken along line 3 - 3.

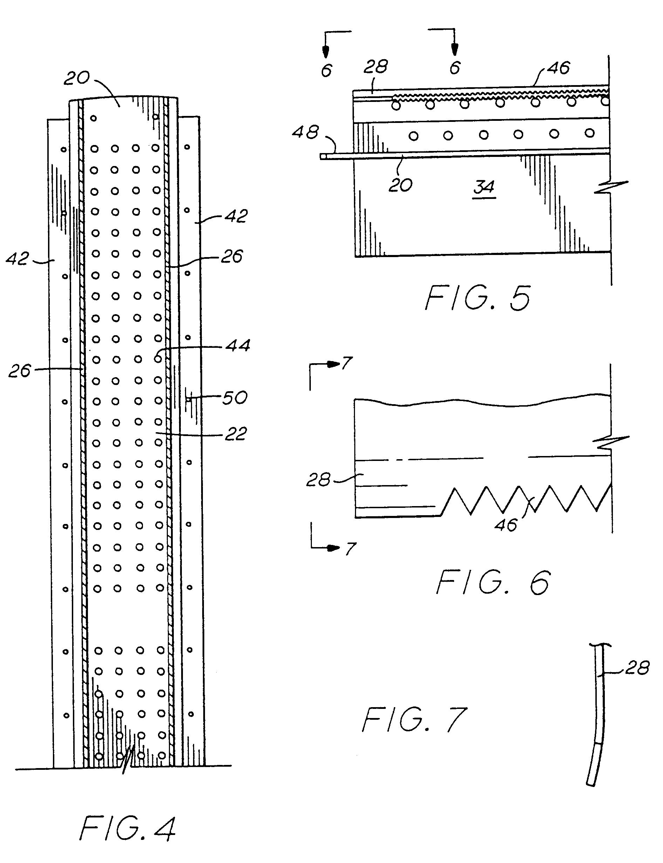

Fig. 4 is a partial in plan view of the assembly of Fig. 3 taken along line 4 - 4.

Fig. 5 is a partial front elevation view of the assembly of Fig. 2 taken along line 5 - 5.

Fig. 6 is a partial detail view of the serrated lip of the assembly of Fig. 5 taken along line 6 - 6.

Fig. 7 is a side view of the serrated lip of Fig. 6 taken along line 7 - 7.

Fig. 8 is a cross sectional view of a side mount downcomer bottom assembly.

Fig. 9 is a partial in plan view of the assembly of Fig. 8 taken along line 9 - 9.

Fig. 10 is a partial in plan view of the assembly of Fig. 8 taken along line 10-10.

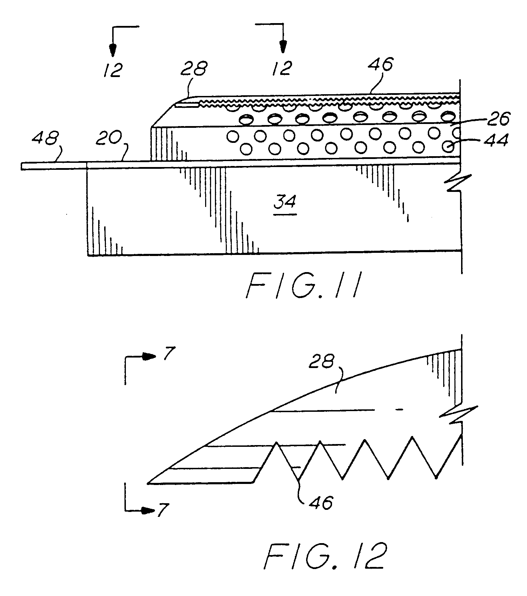

Fig. 11 is a partial front elevational view of the assembly of Fig. 8 taken along line 11-11.

Fig. 12 is a partial detail of the serrated lip of Fig. 11 taken along line 12-12.

### DETAILED DESCRIPTION AND PREFERRED EMBODIMENTS

In the drawings the same or substantially same elements have been given the same indicia.

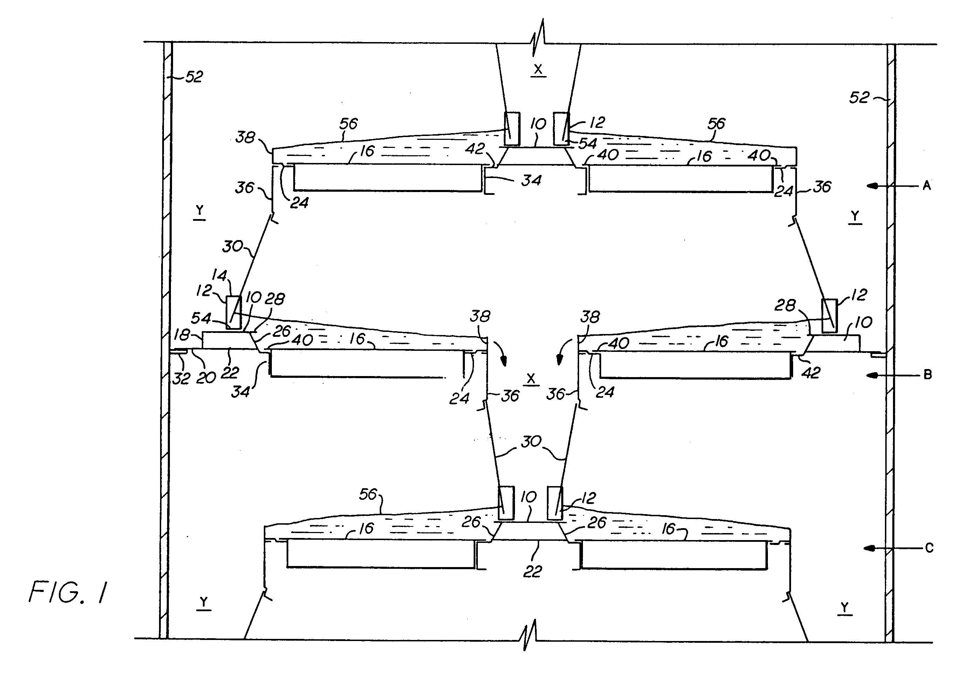

In Fig. 1 the schematic represents a partial of a distillation column with wall 52 and three trays levels A, B and C. In this embodiment there are both centrally positioned downcomers X and laterally positioned downcomers Y, thus illustrating two modes employing the present invention. On level A a central downcomer is shown with seal pan 10 having support members 12 bolted to the top surface thereof. Each support member 12 has a slot 14 extending into it. The angle of the slot is determined by the slope or incline of the downcomer wall seated in the slot. There will usually be at least two such support members 12 position along the seal pan and associated with a particular downcomer wall 30 to support and position the downcomer wall. Each downcomer wall 30 is formed of a plate, i.e., preferably an inclined plate.

The area at the bottom of the downcomer is generally 50 to 70% of the area at the top of the downcomer. The downcomer percent of flood should be 60 to 90% of the jet flood, preferably 83 to 86 %.

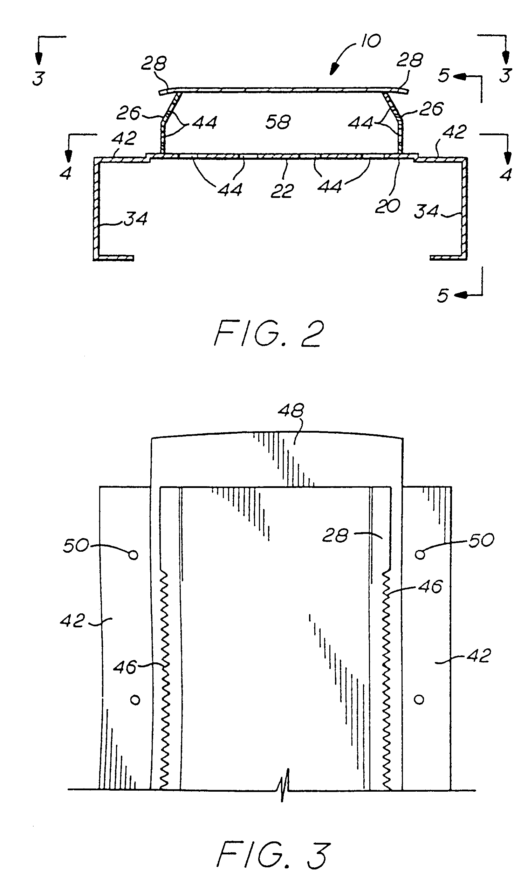

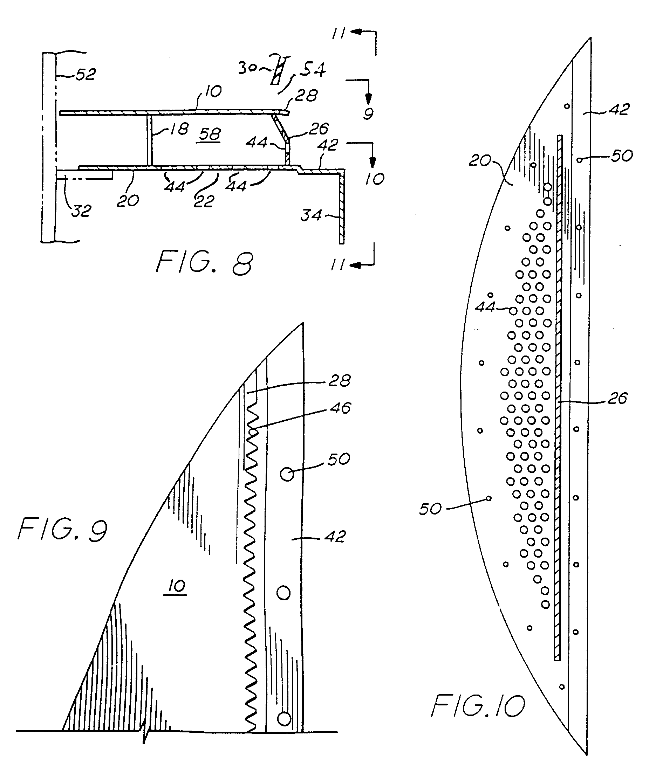

Depending directly from seal pan 10 and sealed thereto is (are) the perforated plate(s) 26, which extend(s) downward and along the seal pan. Preferably the perforated plate(s) 26 is (are) inclined or at least have a portion thereof which is inclined. A portion of the seal pan extends over the perforated plate to form lip 28. As shown in Figs. 3 and 9 a substantial portion of the lip is serrated. The serrations 46 help distribute the upflowing vapors through the liquid exiting the downcomer via gap 54. The liquid level 56 is illustrated on the left hand trays 16 of Fig. 1.

There is frothing of the liquid on the tray such that the froth level may be higher in the area of the downcomer than at the weir 38.

Fig. 8 shows a tray assembly used in a lateral (side) downcomer in greater detail. The bottom member 20 has perforation over a portion 22 and has been formed to provide a shoulder 42 and a side member 34. The shoulder 42 is adapted to have a flange 40 of tray 16 seat thereon with the side member 34 providing a seating surface against which the tray can be snugged up. On the B level support flanges 24 are extended from plates 36 to provide a site to seat the flange 40 of the tray 16 at the upper end of the central downcomer X. There are holes 50 provided along the flange 42 to correspond to holes in the flange 40 (not shown) for screw or bolt mounting. Openings 44 are provided in bottom plate 20 to form the perforated portion 22. The vertical member 18 is sealed to member 20 and to seal pan 10 to isolate the openings on portion 22, member 18, seal pan 10 and the perforated plate 26 in to a chamber 58. The vapor passes up through openings 44 in portion 22 into the chamber 58 then exit through the openings 44 in perforated plate 26. The amount of vapor passing through the insert should be approximately proportional toe the bottom area of the downcomer relative to the effective active area. The seal pan seats against wall 52 and forms tight seal when the bottom member is drawn down on the flange 32 by conventional means such as metal screws through corresponding openings 50 in the flange and member 20. The liquid in the downcomer passes through gap 54 between wall 30 and seal pan 10 over lip 28 on to tray 16. The gap 54 is determined by the flow rates in the column, in the same manner as for conventional arrangements. Since the downcomers will generally be sloped, the actual downcomer bottom width will increase as the clearance increases.

In the downcomers shown in Fig. 1 the upper portion 36 is a substantially vertical member adapted to cooperate with the wall 30. Obviously these two portions could be fabricated as one piece, but assembly in the column is easier with the two separate pieces.

Fig. 3 shows a lateral extension 48 of the bottom member 20, which forms an additional flange for seating and support at the end of the trough like structure formed in this embodiment.

Fig. 2 shows a central downcomer tray assembly which has two liquid/vapor contact sides, that is, there are two perforated plates sealed between seal pan 10 and the perforated portion 22 of bottom member 20. Similarily there are provided two shoulders 42, side members 34, and lips 28.

There are many variations and permutations relating to conventional aspects of distillation columns which can be employed with the present invention, as well as variations on the elements of the present invention, for example: circular, square, or rectangular central downcomers, combinations of circular and trough like central downcomers, multiple weirs of even or uneven height, non serrated lips, elimination of the lip(s), elimination of the bottom member and using braces for strength.

## Claims

1. Downcomer for use in a distillation column, comprising a seal pan (10) forming the bottom of the downcomer and a generally downwardly extending plate (30) having a lower end which extends along the seal pan and is spaced slightly thereabove, characterised in that the seal pan is adapted to be positioned above an adjacent lower tray (16), and in that a generally downwardly extending perforated plate (26) is positioned adjacent to and along and below said seal pan (10) so as to extend to the lower tray (16), whereby to increase the effective active area of the tray.

2. Downcomer according to claim 1, wherein said seal pan (10) forms a lip (28) over an upper end of said perforated plate.

3. Downcomer according to claim 2, wherein said lip (28) is serrated.

4. Downcomer according to any preceding claim, wherein said perforated plate (26) at least partially is inclined downwardly away from said seal pan.

5. Downcomer according to any preceding claim, wherein the generally downwardly extending plate (30) defines a volume whose cross-section decreases in a downward direction.

6. Downcomer according to any preceding claim, comprising
a generally downwardly extending member (18) sealed to said seal pan (10), and
a base plate (22) extending across and beyond said perforated plate (26) and said member (18), said base plate being perforated in the area between said plate and said member (18).

7. Downcomer according to claim 6, wherein said downwardly extending member is a second perforated plate (26).

8. Downcomer according to claim 6, wherein said base plate (22) extends unperforated beyond said downwardly extending member (18) to form at least one shoulder (20).

9. Downcomer according to claim 8, wherein said base plate extends to form two shoulders (42), one each adjacent said downwardly extending plates (26).

10. Tray assembly comprising a downcomer according to any preceding claim, wherein the seal pan (10) is positioned above an adjacent lower tray (16).

11. Distillation column comprising a tray assembly as claimed in claim 10.

12. Distillation column according to claim 11, wherein the column is cylindrical and has a plurality of spaced trays extending transversly across the interior thereof.

13. Distillation column according to claim 11 or claim 12, wherein each tray has a weir associated with each downcomer.

14. Distillation column according to any of claims 11 to 13 wherein said tray defines a trough.

## Patentansprüche

1. Rücklaufeinrichtung bzw. Rücklaufrohr zur Verwendung in einer Destillationssäule, mit einer Dichtschale bzw. einem Dichtteller (10), der den Boden des Rücklaufrohres bildet, und einer allgemein abwärts erstreckten Platte (30), die ein unteres Ende aufweist, welches sich entlang des Dichttellers erstreckt und leicht darüber beabstandet ist, dadurch gekennzeichnet, daß der Dichtteller so angepaßt ist, um oberhalb eines benachbarten unteren Bodens bzw. Kolonnenbodens (16) positioniert zu sein, und dadurch, daß eine allgemein abwärts ausgerichtete, perforierte Platte (26) benachbart zu und entlang und unterhalb des Dichttellers (10) angeordnet ist, um so zu dem unteren Kolonnenboden (16) erstreckt zu sein, wodurch der effektive aktive Bereich des Bodens bzw. Kolonnenbodens vergrößert wird.

2. Rücklaufeinrichtung bzw. Rücklaufrohr nach Anspruch 1, worin der Dichtteller (10) einen Ausguß bzw. einen Schnabel (28) über einem oberen Ende der perforierten Platte ausbildet.

3. Rücklaufeinrichtung bzw. Rücklaufrohr nach Anspruch 2, worin der Ausguß bzw. der Schnabel (28) gekerbt bzw. gezahnt ist.

4. Rücklaufeinrichtung bzw. Rücklaufrohr nach einem der vorstehenden Ansprüche, worin die perforierte Platte (26) zumindest teilweise weg von dem Dichtteller abwärts geneigt ist.

5. Rücklaufeinrichtung bzw. Rücklaufrohr nach einem der vorstehenden Ansprüche, worin die allgemein abwärts ausgerichtete Platte (30) ein Volumen definiert, dessen Querschnitt in einer Abwärtsrichtung abnimmt.

6. Rücklaufeinrichtung bzw. Rücklaufrohr nach einem der vorstehenden Ansprüche, mit einem allgemein abwärts erstreckten Abschnitt (18), der zu dem Dichtteller (10) gedichtet ist, und mit einer Grundplatte (22), die sich quer zu und unterhalb der perforierten Platte (26) und dem Abschnitt (18) erstreckt, wobei die Grundplatte in dem Bereich zwischen der Platte und dem Abschnitt (18) perforiert ist.

7. Rücklaufeinrichtung bzw. Rücklaufrohr nach Anspruch 6, worin der abwärts erstreckte Abschnitt eine zweite perforierte Platte (26) ist.

8. Rücklaufeinrichtung bzw. Rücklaufrohr nach Anspruch 6, worin sich die Grundplatte (22) unperforiert unterhalb des abwärts erstreckten Abschnitts (18) erstreckt, um zumindest einen Absatz bzw. eine Schulter (20) auszubilden.

9. Rücklaufeinrichtung bzw. Rücklaufrohr nach Anspruch 8, worin sich die Grundplatte erstreckt, um zwei Absätze bzw. Schultern (42) auszubilden, die jeweils benachbart zu den abwärts erstreckten Platten (26) sind.

10. Boden- bzw. Kolonnenbodenanordnung mit einer Rücklaufeinrichtung bzw. einem Rücklaufrohr gemäß einem der vorstehenden Ansprüche, worin der Dichtteller (10) oberhalb eines benachbarten unteren Bodens bzw. Kolonnenbodens (16) angeordnet ist.

11. Destillationssäule bzw. -kolonne mit einer Boden- bzw. Kolonnenbodenanordung wie in Anspruch 10 beansprucht.

12. Destillationssäule bzw. -kolonne gemäß Anspruch 11, worin die Säule zylindrisch ist und mehrere beabstandete Böden bzw. Kolonnenböden aufweist, die sich transversal über deren Inneres erstrecken.

13. Destillationssäule bzw. -kolonne gemäß einem der Ansprüche 11 oder 12, worin jeder Boden bzw. Kolonnenboden ein Wehr- bzw. einen Überlauf aufweist, der jeder Rücklaufeinrichtung bzw. jedem Rücklaufrohr zugeordnet ist.

14. Destillationssäule gemäß einem der Ansprüche 11 bis 13, worin der Boden bzw. der Kolonnenboden einen Trog bzw. eine Wanne definiert.

## Revendications

1. Tube de retour utilisable dans une colonne de distillation, comprenant un tampon de fermeture (10) qui constitue la base du tube de retour et une plaque s'étendant sensiblement vers le bas (30) dont une extrémité inférieure s'étend le long du tampon de fermeture et est espacée légèrement au-dessus de celui-ci, caractérisé en ce que le tampon de fermeture est prévu pour être placé au-dessus d'un plateau inférieur adjacent (16), et en ce qu'une plaque perforée s'étendant sensiblement vers le bas (26) est placée en position adjacente le long et au-dessous dudit tampon de fermeture (10) de manière à s'étendre vers le plateau inférieur (16), de façon à augmenter la surface active effective du plateau.

2. Tube de retour suivant la revendication 1, dans lequel ledit tampon de fermeture (10)comporte une lèvre (28) s'étendant au-delà d'une extrémité supérieure de ladite plaque perforée.

3. Tube de retour suivant la revendication 2, dans lequel ladite lèvre (28) est dentelée.

4. Tube de retour suivant une quelconque des revendications précédentes, dans lequel ladite plaque perforée (26) est au moins en partie inclinée vers le bas et à l'opposé dudit tampon de fermeture.

5. Tube de retour suivant une quelconque des revendications précédentes, dans lequel la plaque s'étendant sensiblement vers le bas (30) définit un volume dont la section transversale diminue vers le bas.

6. Tube de retour suivant une quelconque des revendications précédentes, comprenant :
un élément s'étendant sensiblement vers le bas (18) soudé audit tampon de fermeture (10), et
une plaque de base(22) s'étendant en travers et au-delà de ladite plaque perforée (26) et dudit élément (18), ladite plaque de base étant perforée dans la région comprise entre ladite plaque (26) et ledit élément (18).

7. Tube de retour suivant la revendication 6, dans lequel ledit élément s'étendant vers le bas est une deuxième plaque perforée (26).

8. Tube de retour suivant la revendication 6, dans lequel ladite plaque de base (22) s'étend, sans perforations, au-delà dudit élément s'étendant vers le bas (18) pour former au moins un épaulement d'appui (20).

9. Tube de retour suivant la revendication 8, dans lequel ladite plaque de base s'étend de manière à former deux épaulements (42) dont chacun est adjacent aux dites plaques s'étendant vers le bas (26).

10. Agencement de plateau comprenant un tube de retour suivant une quelconque des revendications précédentes, dans lequel le tampon de fermeture (10) est placé au-dessus d'un plateau inférieur adjacent (16).

11. Colonne de distillation comprenant un agencement de plateau suivant la revendication 10.

12. Colonne de distillation suivant la revendication 11, dans laquelle la colonne est cylindrique et comporte une pluralité de plateaux espacés s'étendant transversalement à l'intérieur de la colonne.

13. Colonne de distillation suivant la revendication 11 ou la revendication 12, dans laquelle chaque plateau comporte un déversoir associé à chaque tube de retour.

14. Colonne de distillation suivant une quelconque des revendications 11 à 13, dans la quelle ledit plateau définit une forme en auge.
